# EUROPÄISCHE PATENTSCHRIFT

(11) **EP 2 599 607 B1**
(45) Veröffentlichungstag und Bekanntmachung des Hinweises auf die Patenterteilung: **01.07.2015**
(21) Anmeldenummer: 12007783.9
(22) Anmeldetag: 16.11.2012
(51) Int. Cl.: B29C 45/42, B29C 45/14, B29C 45/26

(54) **Vorrichtung zum Anspritzen eines Kunststoff-Formteils an ein Funktionsteil zur Bildung eines Mehrkomponenten-Teils**
Device for injecting a plastic moulded part onto a functioning part for forming a multi-component part
Dispositif d'injection d'une pièce de formage en matière synthétique sur un module fonctionnel pour la formation d'une pièce à plusieurs composants

(30) Priorität: 03.12.2011 DE 102011120403
(43) Veröffentlichungstag der Anmeldung: 05.06.2013
(73) Patentinhaber: Zahoransky AG, 79674 Todtnau (DE)
(72) Erfinder: Kaczmarek, Ulrich, 79312 Emmendingen (DE)
(74) Vertreter: Börjes-Pestalozza, Henrich

(56) Entgegenhaltungen:
- EP-A2- 1 174 242
- DE-A1-102010 019 625
- JP-A- 9 099 457
- HERBST R ET AL: "DIE DREIFACHE KOMBINATION MEHRKOMPONENETEN-SPRITZGIESSEN VON THERMOPLASTEN ELASTOMEREN UND DUROPLASTEN", KUNSTOFFE INTERNATIONAL, CARL HANSER VERLAG, MUNCHEN, DE, Bd. 90, Nr. 10, 1. Oktober 2000 (2000-10-01), Seite 82,84/85, XP000965889, ISSN: 0023-5563

## Beschreibung

Die Erfindung bezieht sich auf eine Vorrichtung zum Anspritzen eines Kunststoff-Formteils an ein Funktionsteil zur Bildung eines Mehrkomponenten-Teils mit einer Spritzform, die eine Formöffnung zur bereichsweisen Aufnahme des Funktionsteils aufweist, wobei die Spritzform zumindest drei Formplatten aufweist, die zwischen einer geschlossenen Spritzposition und einer Bearbeitungsposition mit jeweils zueinander beabstandeten Formplatten verstellbar sind, wobei ein zwischen einem Funktionsteil-Vorrat und einem ersten Öffnungsbereich zwischen zwei Formplatten in deren Bearbeitungsposition positionierbare Funktionsteilträger zum Übergeben der Funktionsteile von dem Funktionsteil-Vorrat an eine der Formplatten vorgesehen ist, und wobei ein Entnahmegreifer zum Entnehmen des Mehrkomponenten-Teils aus einem zweiten Öffnungsbereich zwischen zwei Formplatten vorgesehen ist.

Solche Mehrkomponenten-Teile, bei denen ein Funktionsteil bereichsweise mit Kunststoff umspritzt ist, sind in zahlreichen Anwendungen bekannt, beispielsweise kann ein Spritzenzylinder als Kunststoff-Formteil an eine Hohlnadel als Funktionsteil angespritzt werden. Neben der Medizintechnik sind beispielsweise auch zahlreiche Anwendungen im Elektronik-Bereich denkbar.

Bislang werden solche Mehrkomponenten-Teile hergestellt, indem das Funktionsteil in eine Formhälfte einer geöffneten Spritzform eingelegt wird, die Spritzform geschlossen und das Kunststoff-Formteil gespritzt wird. Nach dem Abkühlen wird die Spritzform geöffnet und das fertige Kunststoff-Formteil mit dem daran gehaltenen Funktionsteil aus der Spritzform entnommen. Danach kann ein weiteres Funktionsteil in die Spritzform eingelegt werden. Dies hat jedoch erhöhte Zykluszeiten für einen Spritzvorgang zur Folge

Aus der EP 1 174 242 A2 ist bereits ein Etagenwerkzeug vorbekannt, das zum Spritzgießen eines aus mehreren Kunststoffkomponenten bestehenden Kunststoffartikels bestimmt ist. Dabei arbeitet eine mittlere Formplatte des Etagenwerkzeuges auf seiner einen Seite über eine erste Trennebene mit einer Formplatte und auf seiner anderen Seite über eine zweite Trennebene mit einer zweiten Formplatte zusammen. Das vorbekannte Etagenwerkzeug hat eine Mehrzahl von ersten kleineren Formöffnungen, die in der ersten Trennebene vorgesehen sind, und eine Mehrzahl von zweiten größeren Formöffnungen, die in der zweiten Trennebene angeordnet sind. Dabei sind die in den kleineren Formöffnungen hergestellten Funktionsteile von dort in die größeren Formöffnungen einlegbar, um dort ein aus einem anderen Material bestehendes Kunststoff-Formteil anspritzen zu können. Zum Übergeben der Funktionsteile von den einen Funktionsteil-Vorrat bildenden ersten Formöffnungen in die zweiten Formöffnungen ist ein Funktionsteilträger vorgesehen, der durch ein Handlingsystem gebildet wird. Dieses Handlingsystem ist auch als Entnahmegreifer zum Entnehmen des in der vorbekannten Vorrichtung fertiggestellten Mehrkomponenten-Teils bestimmt.

In dem Fachaufsatz HERBST, R. et al, "Die dreifache Kombination. Mehrkomponenten-Spritzgiessen von Thermoplasten, Elastomeren und Duroplasten", Kunststoff International, Carl Hanser Verlag, München, DE, werden verschiedene bekannte Verfahren zum Mehrkomponenten-Spritzgießen von Thermoplasten, Elastomeren und Duroplasten vorbeschrieben. Dabei werden auch Umsetzverfahren mit einer Mehrkomponenten-Spritzgießmaschine in Standardbauweise beschrieben, bei denen eine automatisch arbeitende Handlinganlage zum Umsetzen der Vorspritzlinge in die zweite Trennebene und der Entnahme der fertigen Formteile vorgesehen ist.

Aus der DE 10 2010 019 625 A1 ist bereits ein Verfahren zur Herstellung einer Verbund- oder Hybridkonstruktion vorbekannt, die wenigstens eine thermoplastische Kunststoffkomponente enthält. Das vorbekannte Verfahren wird mit einer Spritzgießmaschine realisiert, die beispielsweise wenigstens zwei Wendeplatten und wenigstens drei Einspritzstationen aufweisen kann. In einer ersten und in einer zweiten Einspritzstation werden dabei zwei Formteile gespritzt, welche nach einer Drehung der Wendeplatte zueinander gerichtet und durch die dritte Einspritzstation miteinander verbunden werden. Die Verwendung von zwei Wendeplatten und drei Einspritzstationen soll es ermöglichen, nicht nur rasch die einzelnen Formteile herzustellen, sondern diese auch noch in einem unmittelbar anschließenden Schritt miteinander zu verbinden.

Mit Hilfe der vorbekannten Vorrichtungen können solche Spritzgussteile hergestellt werden, die aus mehreren Kunststoffkomponenten bestehen. Die Herstellung solcher Mehrkomponenten-Teile bei denen beispielsweise ein aus Metall oder einer Metall-Legierung bestehendes Funktionsteil an ein Kunststoff-Spritzgussteil anzuspritzen ist, ist mit den vorbekannten Vorrichtungen jedoch nicht möglich.

Es besteht daher auch weiterhin die Aufgabe, eine gattungsgemäße Vorrichtung zu schaffen, mit der Mehrkomponenten-Teile mit an ein Funktionsteil angespritztem Kunststoffmaterial mit reduzierter Zykluszeit hergestellt werden können, wobei die dazu verwendeten Funktionsteile beispielsweise auch aus Metall oder einer Metall-Legierung hergestellt sein können.

Die erfindungsgemäße Lösung dieser Aufgabe besteht darin, dass an der düsenseitigen Formplatte Spritzendorne angeordnet sind, die jeweils eine Ausnehmung der mittleren Formplatte durchdringen und so mit dieser die hohlzylindrische Formöffnung bilden, so dass die Kunststoff-Formteile mit den angespritzten Funktionsteilen beim Öffnen der Spritzform an den Spritzendornen der düsenseitigen Formplatte gehalten bleiben können, anschließend mit dem Entnahmegreifer gegriffen, von den Spritzendornen abgezogen und aus dem zweiten Öffnungsbereich der Spritzform entfernt werden können.

An der düsenseitigen Formplatte sind Spritzendorne angeordnet, die jeweils eine Ausnehmung der mittleren Formplatte durchdringen und so mit dieser die hohlzylindrische Formöffnung bilden, so dass die Kunststoff-Formteile mit den angespritzen Funktionsteilen beim Öffnen der Spritzform an den Spritzendornen der düsenseitigen Formplatte gehalten bleiben können. Die mittlere Formplatte der Spritzform bildet dazu zwischen sich und den sie in geschlossener Spritzposition durchdringenden Kunststoff-Formteilen die erforderlichen Formöffnungen. Die an die Kunststoff-Formteile anzuspritzenden. Funktionsteile sind in einer dritten Formplatte der Spritzform aufgenommen. In der Bearbeitungsposition der Spritzform können die beim Öffnen der Spritzform an der düsenseitigen Formplatte gehalten bleibenden Kunststoff-Formteile mit den daran angespritzten Funktionsteilen mittels dem Entnahmegreifer aus dem zweiten Öffnungsbereich entnommen werden. Die Kunststoff-Formteile werden dabei mit dem Entnahmegreifer gegriffen und von den Spritzendornen abgezogen, um anschließend aus dem zweiten Öffnungsbereich der Spritzform entfernt werden zu können. Während also die Funktionsteile im ersten Öffnungsbereich der Spritzform eingelegt werden, sind die mit den angespritzten Funktionsteilen fertiggestellten Kunststoff-Formteile anschließend aus dem zweiten Öffnungsbereich der Spritzform zu entnehmen.

Durch die zwei Öffnungsbereiche kann ein fertiges Mehrkomponenten-Teil in einem Öffnungsbereich entnommen und gleichzeitig in einem anderen Öffnungsbereich ein neues Funktionsteil in eine Formöffnung einer der Formplatten eingesetzt werden. Dadurch kann die Zykluszeit zur Herstellung eines Mehrkomponenten-Teils erheblich reduziert werden. Innerhalb der Spritzform befinden sich wenige bewegte Teile, wie dies beispielsweise bei einer Form mit einer positionierbaren Indexplatte erforderlich wäre, so dass die Spritzform konstruktiv einfach realisierbar ist.

Zudem kann die Spritzform kompakt mit auf Holmen geführten Formplatten ausgebildet sein, was ein präzises, lineares Ver fahren der Formplatten ermöglicht, und Winkeländerungen, wie dies bei holmenlosen Spritzmaschinen auftritt und die für bestimmte Spritzteile problematisch sein können, sind sicher vermieden.

Es ist zweckmäßig, wenn die Spritzform als Mehrfachform ausgebildet ist und wenn der Funktionsteilträger zum gleichzeitigen Übergeben mehrerer Funktionsteile und der Entnahmegreifer zum gleichzeitigen Entnehmen mehrerer Mehrkomponenten-Teile ausgebildet sind. Dadurch können mehrere Mehrkomponenten-Teile gleichzeitig gefertigt und die Produktionsgeschwindigkeit erhöht werden. Bei geeigneter Ausbildung der Formplatten könnten auch Mehrkomponenten-Teile gefertigt werden, die mehrere Funktionsteile aufweisen.

Es ist vorteilhaft, wenn der Funktionsteilträger quer zur Öffnungsachse der Spritzform linearverschiebbar gelagert ist. Der Funktionsteilträger kann dann bei geöffneter Spritzform durch eine einfache Linearbewegung in den betreffenden Öffnungsbereich eingebracht werden, um das oder die Funktionsteil(e) an die Formplatte zu übergeben. Dazu kann der Funktionsteilträger beispielsweise an einer neben der Spritzform angeordneten Führungsschiene beweglich angebracht sein, entlang der er sich zwischen der Spritzform und dem Funktionsteil-Vorrat positionieren lässt.

Der Entnahmegreifer kann zumindest eine dem jeweils herzustellenden Mehrkomponenten-Teil formangepasste Greiferbacke aufweisen. Dadurch kann das Mehrkomponenten-Teil sicher gegriffen und entnommen werden, ohne dass dieses beschädigt wird oder aus dem Entnahmegreifer herausfallen kann. Dabei können mehrere formangepasste Greiferbacken zum Greifen eines Mehrkomponenten-Teils vorgesehen sein und/oder mehrere Greiferbacken sind zur gleichzeitigen Entnahme mehrerer Mehrkomponenten-Teile vorgesehen.

Die Greiferbacken können insbesondere im Laser-Sinter-Verfahren hergestellt und einstückig ausgebildet sein.

Die Funktionsteile bestehen bevorzugt aus Metall oder Metall-Legierungen.

Insbesondere können die Funktionsteile Nadeln oder Hohlnadeln für Spritzen sein.

Um ein präzises Übergeben der Funktionsteile zu ermöglichen und fehlerhafte oder beschädigte Funktionsteile vor dem Übergeben an eine Formplatte aussortieren zu können ist es vorteilhaft, wenn zumindest eine Vorrichtung zum Ausrichten und/oder zur Funktionskontrolle der an dem Funktionsteilträger gehaltenen Funktionsteile vorgesehen ist. Dadurch kann Ausschussproduktion durch falsch ausgerichtete oder defekte Funktionsteile vermieden werden. Falls ein falsch ausgerichtetes Funktionsteil detektiert wird, kann dieses neu ausgerichtet oder vom Funktionsteilträger entfernt und durch ein weiteres Funktionsteil ausgetauscht werden. Wenn ein defektes oder beschädigtes Funktionsteil erkannt wird, so kann dieses vom Funktionsteilträger entfernt, entsorgt und durch ein weiteres Funktionsteil, das dann wiederum einer Lage- und/oder Funktionskontrolle unterzogen wird, ersetzt werden.

Für ein beschleunigtes und präzises Übergeben der Funktionsteile aus dem Funktionsteil-Vorrat an den Funktionsteilträger ist es vorteilhaft, wenn dem Funktionsteil-Vorrat eine Einrichtung zum Vereinzeln und Ausrichten der Funktionsteile zugeordnet ist.

Der Funktionsteilträger und/oder die Formplatte zur Aufnahme der Funktionsteile können Fixierelemente für die Funktionsteile aufweisen, um einen sicheren Halt der Funktionsteile zu gewährleisten und ein versehentliches Verrutschen eines Funktionsteils aus seiner Sollposition innerhalb des Funktionsteilträgers oder der Formplatte sicher zu vermeiden.

Das Übergeben eines Funktionsteils von dem Funktionsteilträger an eine Formplatte oder deren Formöffnung kann besonders einfach realisiert werden, wenn der Funktionsteilträger zumindest ein linearverschiebbares Beaufschlagungselement zum Übergeben eines Funktionsteils an die betreffende Formplatte aufweist. Das Funktionsteil kann dann praktisch aus dem Funktionsteilträger in die Formplatte durch Beaufschlagung mit dem Beaufschlagungselement verschoben werden.

Der Funktionsteilträger und die Formplatte zur Aufnahme der Funktionsteile können jeweils Kopplungselemente zum Positionieren der beiden Teile aneinander aufweisen. Dadurch ist eine präzise, lagerichtige Positionierung der beiden Teile zueinander und somit eine dementsprechend präzise Ausrichtung auch des Funktionsteils beim Übergeben eines Funktionsteils sichergestellt. Um die Kopplungselemente miteinander in Eingriff zu bringen und wieder voneinander zu lösen kann der Funktionsteilträger in Öffnungsrichtung der Spritzform linearverschiebbar positionierbar sein.

Je nach Art des zu spritzenden Kunststoff-Formteils kann es zweckmäßig sein, wenn die Spritzform öffenbare Formeinsätze aufweist. Dies ermöglicht beispielsweise das Spritzen von Kunststoff-Formteilen mit Schrägen oder Hinterschneidungen.

Es ist zweckmäßig, wenn die zur Aufnahme des Funktionsteils vorgesehene Formplatte zumindest eine Aufnahme für einen ein Funktionsteil aufnehmenden Wechseleinsatz aufweist. Durch Austausch der Wechseleinsätze kann eine Formplatte schnell und einfach für andere Funktionsteile umgerüstet werden, ohne die ganze Formplatte auszutauschen. Dies ermöglicht eine universelle Verwendung und eine kostengünstige Umstellung der Formplatte für unterschiedliche Funktionsteile, beispielsweise hinsichtlich Größe und/oder Kontur.

Die Wechseleinsätze können dabei auch drehbar gelagert sein. Dies ermöglicht ein Drehen der Funktionsteile während dem Spritzvorgang, was beispielsweise zur Herstellung von Luer-Lock-Spritzenadaptern erforderlich ist.

Zweckmäßigerweise ist dabei ein Drehantrieb für die Wechseleinsätze vorgesehen.

Das Kunststoffmaterial für das Kunststoff-Formteil kann vorzugsweise ein Copolymer sein. Solche Materialien sind besonders gut geeignet für sterile Einmalprodukte wie beispielsweise befüllt verpackte Insulinspritzen oder Butterfly-Nadeln zum Legen eines dauerhaften Zugangs.

Zum Einspritzen des Kunststoffmaterials in die Spritzform kann insbesondere eine Heißkanaldüse vorgesehen sein.

Beim Anfahren der Spritzvorrichtung oder nach längeren Spritzpausen ist die Spritzform in der Regel zu kalt, um die gewünschte hohe Qualität der Spritzlinge zu gewährleisten. Die Spritzform könnte vorgewärmt werden, was jedoch zusätzliche Heizaggregate erfordert und somit aufwändig und teuer ist. Zudem ist es schwierig, den Temperaturverlauf innerhalb der Spritzform abzubilden, wie er auch im regulären Spritzzyklus vorhanden ist.
Es werden daher üblicherweise einige Spritzvorgänge durchgeführt, bis die Spritzvorrichtung auf Betriebstemperatur gebracht ist. Die dabei anfallenden Spritzlinge müssen aussortiert werden. Da die Funktionsteile üblicherweise Widerhaken, Vorsprünge oder sonstige Bereiche aufweisen, die eine sichere und feste Verbindung mit dem Kunststoff-Formteil gewährleistet, ist ein Trennen von Funktionsteil und Spritzmaterial der aussortierten Vor-Spritzlinge nur mit großem Aufwand möglich, um eine sortenreine Entsorgung oder Verwertung der unterschiedlichen Materialen zu ermöglichen. Zudem können die Funktionsteile zumeist nicht erneut verwendet werden, was zu hohen Mehrkosten führt.

Es kann daher zweckmäßig sein, wenn Platzhalterteile vorgesehen sind, die in die zur Aufnahme des Funktionsteils vorgesehene Formplatte einsetzbar sind.
Während der Anfahrphase der Spritzeinrichtung und den ersten Spritzzyklen zum Aufwärmen der Spritzform werden diese Platzhalterteile anstelle der echten Funktionsteile in die Formplatte eingesetzt. Die Platzhalterteile können einfacher ausgestaltet sein als die echten Funktionsteile, so dass die Kosten für die Ausschussproduktion in der Anlaufphase reduziert sind. Die Platzhalterteile können auch mit einer glatten Oberfläche ohne Vorsprünge oder Widerhaken versehen sein, um ein einfaches Trennen von Platzhalterteil und Spritzmaterial zu ermöglichen.

Dabei ist es vorteilhaft, wenn die zur Aufnahme des Funktionsteils vorgesehene Formplatte, die Wechseleinsätze oder die Fixierelemente für eine klemmende Verbindung mit den Platzhalterteilen beim Öffnen der Spritzform ausgebildet sind. Die Platzhalterteile verbleiben so beim Öffnen der Spritzform im Bereich der Formplatte und das Kunststoff-Formteil wird direkt beim Öffnen der Spritzform von dem Platzhalterteil getrennt. Das Kunststoff-Formteil kann dann direkt entsorgt oder einer Materialverwertung zugeführt werden. Das Platzhalterteil kann ebenfalls entsorgt werden oder gegebenenfalls für einen weiteren Spritzzyklus der Aufwärmphase in der Formplatte verbleiben.

Nachstehend ist die erfindungsgemäße Vorrichtung anhand der Zeichnungen näher erläutert.

Es zeigt:
- Fig. 1: eine Vorrichtung zum Anspritzen eines Kunststoff-Formteils an ein Funktionsteil mit geschlossener Spritzform,
- Fig. 2 und Fig. 3: die Vorrichtung aus Figur 1 bei geöffneter Spritzform während dem Entnehmen der fertigen Mehrkomponenten-Teile und dem Einsetzen der Funktionsteile in eine der Formplatten und
- Fig. 4: die Spritzform nach dem Entnehmen der fertigen Mehrkomponenten-Teile und dem Einsetzen der Funktionsteile in eine der Formplatten.

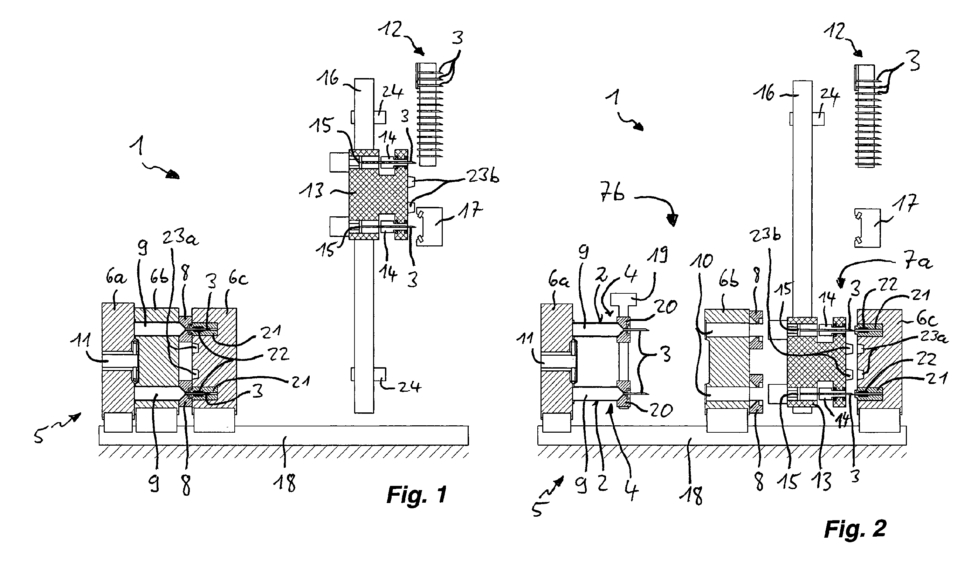

Eine im Ganzen mit 1 bezeichnete Vorrichtung zum Anspritzen eines Kunststoff-Formteils 2 an ein Funktionsteil 3 zur Bildung eines Mehrkomponenten-Teils 4 weist gemäß den Figuren eine Spritzform 5 mit drei Formplatten 6a,6b,6c auf. Die Formplatten 6a,6b,6c sind zwischen einer geschlossenen Spritzposition (Figur 1) und einer Bearbeitungsposition (Fig. 2-4) mit jeweils zueinander beabstandeten Formplatten 6a,6b,6c verstellbar. Zwischen den in Bearbeitungsposition zueinander beabstandeten Formplatten 6a und 6b einerseits und den Formplatten 6b und 6c andererseits sind zwei Öffnungsbereiche 7a, 7b gebildet.

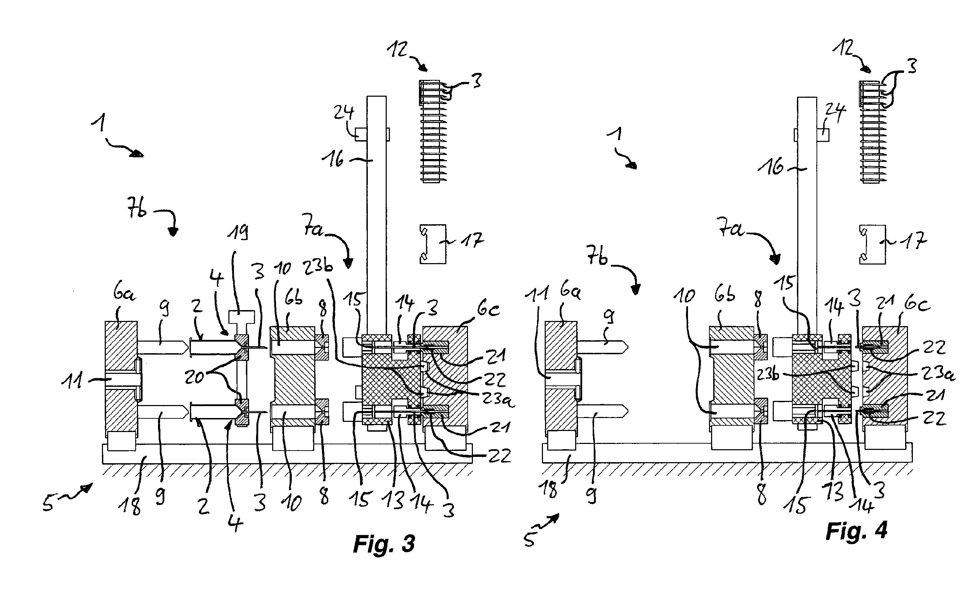

In Figur 1 ist die Spritzform 5 geschlossen und die düsenseitige Formplatte 6a, die mittlere Formplatte 6b und die Formplatte 6c zur Aufnahme der Funktionsteile 3 befinden sich in ihrer Spritzposition. Der mittleren Formplatte 6b sind zusätzliche öffenbare Formeinsätze 8 zugeordnet. In der Schließstellung ragt jeweils ein Funktionsteil 3 in eine Formöffnung der Spritzform 5 im Bereich der öffenbaren Formeinsätze 8 hinein. An der düsenseitigen Formplatte 6a sind Spritzendorne 9 angeordnet, die jeweils eine Ausnehmung 10 (Fig. 2-4) der mittleren Formplatte 6b durchdringen und so mit dieser eine hohlzylindrische Formöffnung bilden. Durch eine Heißkanaldüse 11 an der düsenseitigen Formplatte 6a wird Kunststoffmaterial in die Spritzform 5 gespritzt, das in die Formöffnungen gelangt und im Bereich der öffenbaren Formeinsätze 8 die Funktionsteile 3 bereichsweise umschließt. Dadurch wird ein Kunststoff-Formteil 2, hier ein Spritzenkörper, an das Funktionsteil 3 angespritzt und dabei mit diesem verbunden, so dass sie gemeinsam ein Mehrkomponenten-Teil 4 bilden (Fig. 2,3).

Während dem Spritzvorgang gemäß Figur 1 werden weitere Funktionsteile 3 aus einem Funktionsteil-Vorrat 12 an einen Funktionsteilträger 13 übergeben. Die Funktionsteile 3, hier Hohlnadeln für Spritzen, werden aus dem Funktionsteil-Vorrat 12 in Halterungen 14 des Funktionsteilträgers 13 überführt. Die Halterungen 14 ermöglichen eine radiale Ausrichtung der Funktionsteile 3 in dem Funktionsteilträger 13. Eine axiale Ausrichtung der Funktionsteile 3 erfolgt durch Anschlagen an ein Beaufschlagungselement 15 des Funktionsteilträgers 13. Der Funktionsteilträger 13 ist entlang einer Führungsschiene 16 quer zur Öffnungsrichtung der Spritzform 5 linearverschiebbar gelagert. Durch eine entsprechende Linearverschiebung des Funktionsteilträgers 13 werden die Funktionsteile 3 einer Vorrichtung 17 zur Lage- und Funktionskontrolle zugeführt. Falls ein Funktionsteil 3 beschädigt oder falsch in den Funktionsteilträger 13 eingesetzt ist, kann dieses aus dem Funktionsteilträger 13 ausgeworfen und durch ein anderes Funktionsteil 3 ersetzt werden, so dass vermieden ist, dass beschädigte Funktionsteile 3 in die Spritzform 5 eingesetzt werden.

Nach dem Spritzvorgang und dem Erkalten des Kunsstoffmaterials wird die Spritzform 5 geöffnet und die Formplatten 6a, 6b, 6c werden in ihre Bearbeitungsposition gebracht. Die mittlere Formplatte 6b und die Formplatte 6c zur Aufnahme der Formteile 3 sind hierzu linearverschiebbar an einer Führungsschiene 18 gelagert. Zum Öffnen der Spritzform 5 werden die öffenbaren Formeinsätze 8 in ihre Offenstellung gebracht und zusammen mit der mittleren Formplatte 6b von der düsenseitigen Formplatte 6a wegbewegt, ebenso wird die Formplatte 6c linearverschoben, so dass zwischen der mittleren Formplatte 6b und der Formplatte 6c zur Aufnahme der Funktionsteile 3 ein erster Öffnungsbereich 7a und zwischen der düsenseitigen Formplatte 6a und der mittleren Formplatte 6b ein zweiter Öffnungsbereich 7b gebildet ist.

Die Kunststoff-Formteile 2 mit den angespritzten Funktionsteilen 3 bleiben beim Öffnen der Spritzform 5 an den Spritzendornen 9 der düsenseitigen Formplatte 6a gehalten. Mit einem Entnahmegreifer 19 werden die fertigen Mehrkomponenten-Teile 4 anschließend gegriffen (Fig. 2), von den Spritzendornen 9 abgezogen (Fig. 3) und aus dem zweiten Öffnungsbereich 7b der Spritzform 5 entfernt. Der Entnahmegreifer 19 weist dabei an das jeweilige Mehrkomponenten-Teil 4 angepasste Greiferbacken 20 auf.

Während dem Entnehmen der Mehrkomponenten-Teile 4 aus der Spritzform 5 wird der Funktionsteilträger 13 entlang seiner Führungsschiene 16 in den ersten Öffnungsbereich 7a der Spritzform 5 bewegt (Fig. 2). Die Führungsschiene 16 ist über zwei Führungen 24 in Öffnungsrichtung der Spritzform 5 linearverschiebbar gelagert, so dass der Funktionsteilträger 13 der Formplatte 6c zur Aufnahme der Funktionsteile 3 angenähert werden kann (Fig. 3).
In dieser angenährter Position werden die Funktionsteile 3 durch Axialverschiebung der Beaufschlagungselemente 15 des Funktionsteilträgers 13 in jeweils einen Wechseleinsatz 21 der Formplatte 6c übergeben. Um die Funktionsteile 3 sicher in ihrer Position zu halten, sind zusätzliche Fixierelemente 22 vorgesehen.
Damit der Funktionsteilträger 13 und die Formplatte 6c beim Übergeben der Funktionsteile 3 in einer exakten Lage zueinander ausgerichtet sind und so ein präzises Übergeben der Funktionsteile 3 sichergestellt ist, sind an dem Funktionsteilträger 13 und an der Formplatte 6c jeweils Kopplungselemente 23a, 23b vorgesehen, die in Übergabeposition ineinandergreifen und den Funktionsteilträger 13 in der gewünschten Position an der Formplatte 6c fixieren.

Gemäß Figur 4 ist der Funktionsteilträger 13 nach dem Übergeben der Funktionsteile 3 wieder von der Formplatte 6c zurückgezogen, so dass der Funktionsteilträger 13 entlang seiner Führungsschiene 16 aus dem ersten Öffnungsbereich 7a der Spritzform 5 herausbewegt, die Spritzform 5 geschlossen und ein weiterer Spritzvorgang gemäß Figur 1 durchgeführt werden kann.

Da das Bestücken des Funktionsteilträgers 13 mit neuen Funktionsteilen 3 während eines Spritzvorgangs und das Einfahren des Funktionsteilträgers 13 in den Öffnungsbereich 7a zur Zufuhr neuer Funktionsteile 3 an die Spritzform 5 während dem Entnehmen der fertigen Mehrkomponenten-Teile 4, bestehend aus Funktionsteil 3 und dem angespritzten Kunststoff-Formteil 2, am zweiten Öffnungsbereich 7b erfolgt, ist eine reduzierte Zykluszeit und somit eine hohe Produktionsgeschwindigkeit möglich. Da die Funktionsteile 3 vor dem Einsetzen in die Formplatte 6c präzise ausgerichtet und auf korrekte Funktion beziehungsweise Beschädigungen geprüft werden, kann Ausschussproduktion zumindest weitgehend vermieden werden.

In dem in den Figuren dargestellten Funktionsteil-Vorrat 12 sind die Funktionsteile 3, hier Hohlnadeln für Spritzen, bereits vereinzelt und lagerichtig sortiert. Die Zuführung der Funktionsteile 3 aus einem nicht dargestellten, ungeordneten Vorrat an diesen geordneten Funktionsteil-Vorrat 12 kann beispielsweise erfolgen, indem die Funktionsteile 3 aus einem Materialkasten mit unsortierten Funktionsteilen 3 durch einen Schieber oder einen Kreisbogen einzeln abgeteilt werden. Sowohl ein Schieber wie auch ein Kreisbogen können dabei mehrere Kerben aufweisen, die jeweils nur ein einzelnes Funktionsteil aufnehmen können. Insbesondere wenn es sich bei den Funktionsteilen um Nadeln handelt, können diese über Hohlleitungen und Druckluft oder Vakuum dem Funktionsteil-Vorrat 12 zugeführt werden. Die Hohlleitungen können dabei aus Metall, insbesondere Edelstahl, oder aus flexiblem Material bestehen. Um Beschädigungen sowohl der Nadeln wie auch der Hohlleitungen zu vermeiden, werden die Nadeln dabei mit der Spitze nach hinten transportiert. Der ungeordnete Vorrat kann ein Materialkasten sein, der automatisch gewechselt wird, wenn dieser leer ist.

Da beim Anfahren der Vorrichtung 1 oder nach längeren Spritz-Pausen die Spritzform 5 zu kalt ist, um die üblicherweise geforderte hohe Qualität der Spritzlinge zu gewährleisten, müssen zunächst einige Spritzungen durchgeführt werden, bei denen die gespritzten Kunststoff-Formteile 2 hinterher entsorgt werden. Um zu verhindern, dass dadurch die üblicherweise hochwertigen und somit teuren Funktionsteile 3, an die das Kunststoffmaterial angespritzt wird, ebenfalls entsorgt werden müssen, können nicht dargestellte Platzhalterteile bereitgehalten werden, die beim Anlaufen der Vorrichtung 1 oder nach längeren Spritz-Pausen anstelle der Funktionsteile 3 von dem Funktionsteilträger 13 aufgenommen und in die Formplatte 6c übergeben werden. Die ersten Spritzzyklen werden dann anstelle mit den echten Funktionsteilen 3 mit diesen Platzhalterteilen durchgeführt, die kostengünstiger hergestellt werden können als die echten Funktionsteile 3. Zudem können die Platzhalterteile so ausgebildet sein, dass sie sich nach dem Spritzvorgang leicht von dem Kunststoff-Formteil 2 trennen lassen, so dass eine sortenreine Wiederverwertung des Kunststoffmaterials und gegebenenfalls auch der Platzhalterteile möglich ist.
Die Platzhalterteile können auch so ausgebildet sein, dass sie beim Öffnen der Spritzform 5 in der Formplatte 6c verbleiben und somit beim Öffnen der Spritzform 5 das Kunststoff-Formteil 2 von dem Platzhalterteil automatisch getrennt wird, so dass separate Vorgänge zum Trennen der beiden Teile nicht erforderlich sind.

Falls unterschiedliche Mehrkomponenten-Teile 4 hergestellt werden sollen, beispielsweise Spritzen mit Kanülen unterschiedlicher Dicke als Funktionsteil 3, können auch entsprechend unterschiedlich dimensionierte Platzhalterteile bereitgehalten werden, die je nach Bedarf mit dem Funktionsteilträger 13 an die Formplatte 6c übergeben werden.

Zur Anpassung der Vorrichtung 1 an unterschiedliche Funktionsteile 3, um verschiedenartige Mehrkomponenten-Teile 4 herstellen zu können, sind an der Formplatte 6c Wechseleinsätze 21 vorgesehen, die einfach entnommen und gegen an das jeweilige Funktionsteil 3 angepasste Wechseleinsätze 21 ausgetauscht werden können. Somit ist es kostengünstig und mit geringem konstruktivem Aufwand möglich, Mehrkomponenten-Teile 4 mit unterschiedlichen Funktionsteilen 3 herzustellen, beispielsweise Spritzen mit unterschiedlichen Kanülen. Durch Auswechseln der Formplatten 6a,6b sowie der Formeinsätze 8 können auch unterschiedliche Kunststoff-Formteile 2 gespritzt werden, so dass eine Vorrichtung 1 mit vergleichsweise geringem Aufwand zur Herstellung verschiedenster Mehrkomponenten-Teile umgerüstet werden kann. Es kann eine Standard-Spritzgießmaschine verwendet werden, die durch geeignete Wahl der Formplatten und Formeinsätze sowie der Wechseleinsätze flexibel an verschiedene herzustellende Mehrkomponenten-Teile angepasst werden kann. Aufwändige Wechsel-Formplatten mit Teil-Kavitäten zur Aufnahme der Funktionsteile sind nicht erforderlich und es ist ein einfacher automatisierter Betrieb der Vorrichtung möglich. Durch das Prüfen der Funktionsteile vor dem Einsetzen in die dafür vorgesehene Formplatte und vor dem Anspritzen des Kunststoffmaterials kann Ausschussproduktion vermieden werden.

## Patentansprüche

1. Vorrichtung (1) zum Anspritzen eines Kunststoff-Formteils (2) an ein Funktionsteil (3) zur Bildung eines Mehrkomponenten-Teils (4) mit einer Spritzform (5), die eine Formöffnung zur bereichsweisen Aufnahme des Funktionsteils (3) aufweist, wobei die Spritzform (5) zumindest drei Formplatten (6a,6b,6c) aufweist, die zwischen einer geschlossenen Spritzposition und einer Bearbeitungsposition mit jeweils zueinander beabstandeten Formplatten (6a,6b,6c) verstellbar sind, wobei ein zwischen einem Funktionsteil-Vorrat (12) und einem ersten Öffnungsbereich (7a) zwischen zwei Formplatten (6b,6c) in deren Bearbeitungsposition positionierbarer Funktionsteilträger (13) zum Übergeben der Funktionsteile (3) von dem Funktionsteil-Vorrat (12) an eine der Formplatten (6c) vorgesehen ist, und wobei ein Entnahmegreifer (19) zum Entnehmen des Mehrkomponenten-Teils (4) aus einem zweiten Öffnungsbereich (7b) zwischen zwei Formplatten (6a, 6b) vorgesehen ist, **dadurch gekennzeichnet, dass** an der düsenseitigen Formplatte (6a) Spritzendorne (9) angeordnet sind, die jeweils eine Ausnehmung (10) der mittleren Formplatte (6b) durchdringend und so mit dieser die hohlzylindrische Formöffnung bilden, so dass die Kunststoff-Formteile (2) mit den angespritzten Funktionsteilen (3) beim Öffnen der Spritzform (5) an den Spritzendornen (9) der düsenseitigen Formplatte (6a) gehalten bleiben können, anschließend mit dem Entnahmegreifer (19) gegriffen, von den Spritzendornen (9) abgezogen und aus dem zweiten Öffnungsbereich (7b) der Spritzform (5) entfernt werden können.

2. Vorrichtung nach Anspruch 1, **dadurch gekennzeichnet, dass** die Spritzform (5) als Mehrfachform ausgebildet ist und dass der Funktionsteilträger (13) zum gleichzeitigen Übergeben mehrerer Funktionsteile (3) und der Entnahmegreifer (19) zum gleichzeitigen Entnehmen mehrerer Mehrkomponenten-Teile (4) ausgebildet sind.

3. Vorrichtung nach Anspruch 1 oder 2, **dadurch gekennzeichnet, dass** der Funktionsteilträger (13) quer zur Öffungsachse der Spritzform (5) linearverschiebbar gelagert ist.

4. Vorrichtung nach einem der Ansprüche 1 bis 3, **dadurch gekennzeichnet, dass** der Entnahmegreifer (19) zumindest eine dem jeweils herzustellenden Mehrkomponenten-Teil (4) formangepasste Greiferbacke (20) aufweist.

5. Vorrichtung nach einem der Ansprüche 1 bis 4, **dadurch gekennzeichnet, dass** zumindest eine Vorrichtung (17) zum Ausrichten und/oder zur Funktionskontrolle der an dem Funktionsteilträger (13) gehaltenen Funktionsteile (3) vorgesehen ist.

6. Vorrichtung nach einem der Ansprüche 1 bis 5, **dadurch gekennzeichnet, dass** dem Funktionsteil-Vorrat (12) eine Einrichtung zum Vereinzeln und Ausrichten der Funktionsteile (3) zugeordnet ist.

7. Vorrichtung nach einem der Ansprüche 1 bis 6, **dadurch gekennzeichnet, dass** der Funktionsteilträger (13) und/oder die Formplatte (6c) zur Aufnahme der Funktionsteile (3) Fixierelemente (22) für die Funktionsteile (3) aufweisen.

8. Vorrichtung nach einem der Ansprüche 1 bis 7, **dadurch gekennzeichnet, dass** der Funktionsteilträger (13) zumindest ein linearverschiebbares Beaufschlagungselement (15) zum Übergeben eines Funktionsteils (3) an die betreffende Formplatte (6c) aufweist.

9. Vorrichtung nach einem der Ansprüche 1 bis 8, **dadurch gekennzeichnet, dass** der Funktionsteilträger (13) und die Formplatte (6c) zur Aufnahme der Funktionsteile (3) jeweils Kopplungselemente (23a,23b) zum Positionieren der beiden Teile aneinander aufweisen.

10. Vorrichtung nach einem der Ansprüche 1 bis 9, **dadurch gekennzeichnet, dass** die Spritzform (5) öffenbare Formeinsätze (8) aufweist.

11. Vorrichtung nach einem der Ansprüche 1 bis 10, **dadurch gekennzeichnet, dass** die zur Aufnahme des Funktionsteils (3) vorgesehene Formplatte (6c) zumindest eine Aufnahme für einen ein Funktionsteil (3) aufnehmenden Wechseleinsatz (21) aufweist.

12. Vorrichtung nach Anspruch 11, **dadurch gekennzeichnet, dass** die Wechseleinsätze (21) drehbar gelagert sind.

13. Vorrichtung nach Anspruch 11 oder 12, **dadurch gekennzeichnet, dass** ein Drehantrieb für die Wechseleinsätze (21) vorgesehen ist.

14. Vorrichtung nach einem der Ansprüche 1 bis 13, **dadurch gekennzeichnet, dass** zum Einspritzen des Kunststoffmaterials in die Spritzform (5) eine Heißkanaldüse (11) vorgesehen ist.

15. Vorrichtung nach Anspruch 14, **dadurch gekennzeichnet, dass** die zur Aufnahme des Funktionsteils (3) vorgesehene Formplatte (6c), die Wechseleinsätze (21) oder die Fixierelemente (22) für eine klemmende Verbindung mit den Platzhalterteilen beim Öffnen der Spritzform (5) ausgebildet sind.

## Claims

1. Apparatus (1) for injection moulding a synthetic material moulded part (2) onto a functional part (3) so as to form a multi-component part (4), comprising an injection mould (5) which has a mould opening for receiving the functional part (3) in regions, the injection mould (5) having at least three mould plates (6a, 6b, 6c) which can be adjusted between a closed injection position and a processing position with mould plates (6a, 6b, 6c) spaced apart from one another in each case, a functional part carrier (13) being provided which can be positioned between a functional part store (12) and a first opening region (7a) between two mould plates (6b, 6c) in the processing position thereof, in order to transfer the functional parts (3) from the functional part store (12) to one of the mould plates (6c), and a withdrawal gripper (19) being provided for withdrawal of the multi-component part (4) from a second opening region (7b) between two mould plates (6a, 6b), **characterised in that** injection mandrels (9) are disposed on the nozzle-side mould plate (6a), pass through a respective aperture (10) in the middle mould plate (6b) and thus form therewith the hollow cylindrical mould opening so that the synthetic material moulded parts (2) can stay retained with the injected functional parts (3) during opening of the injection mould (5) at the injection mandrels (9) of the nozzle-side mould plate (6a), can then be gripped by the withdrawal gripper (19), pulled from the injection mandrels (9) and removed from the second opening region (7b) of the injection mould (5).

2. Apparatus as claimed in claim 1, **characterised in that** the injection mould (5) is formed as a multiple mould and that the functional part carrier (13) is formed to simultaneously transfer a plurality of functional parts (3) and the withdrawal gripper (19) is formed to simultaneously withdraw a plurality of the multi-component parts (4).

3. Apparatus as claimed in claim 1 or 2, **characterised in that** the functional part carrier (13) is mounted in a linearly displaceable manner transverse to the opening axis of the injection mould (5).

4. Apparatus as claimed in any one of claims 1 to 3, **characterised in that** the withdrawal gripper (19) has at least one gripper jaw (20) which has a shape adapted to the multi-component part (4) to be produced in each case.

5. Apparatus as claimed in any one of claims 1 to 4, **characterised in that** at least one apparatus (17) is provided for alignment and/or functional inspection of the functional parts (3) held on the functional part carrier (13).

6. Apparatus as claimed in any one of claims 1 to 5, **characterised in that** the functional part store (12) is allocated a device for separating and aligning the functional parts (3).

7. Apparatus as claimed in any one of claims 1 to 6, **characterised in that** the functional part carrier (13) and/or the mould plate (6c) for receiving the functional parts (3) have fixing elements (22) for the functional parts (3).

8. Apparatus as claimed in any one of claims 1 to 7, **characterised in that** the functional part carrier (13) has at least one linearly displaceable impinging element (15) for transferring a functional part (3) to the respective mould plate (6c).

9. Apparatus as claimed in any one of claims 1 to 8, **characterised in that** the functional part carrier (13) and the mould plate (6c) for receiving the functional parts (3) each have coupling elements (23a, 23b) for positioning the two parts on one another.

10. Apparatus as claimed in any one of claims 1 to 9, **characterised in that** the injection mould (5) has openable mould inserts (8).

11. Apparatus as claimed in any one of claims 1 to 10, **characterised in that** the mould plate (6c) provided for receiving the functional part (3) has at least one receptacle for an interchangeable insert (21) which receives a functional part (3).

12. Apparatus as claimed in claim 11, **characterised in that** the interchangeable inserts (21) are mounted so as to be rotatable.

13. Apparatus as claimed in claim 11 or 12, **characterised in that** a rotary drive for the interchangeable inserts (21) is provided.

14. Apparatus as claimed in any one of claims 1 to 13, **characterised in that** a heating channel nozzle (11) is provided for injecting the synthetic material into the injection mould (5).

15. Apparatus as claimed in claim 14, **characterised in that** the mould plate (6c) provided for receiving the functional part (3), the interchangeable inserts (21) or the fixing elements (22) are designed for clamped connection to the placeholder parts during opening of the injection mould (5).

## Revendications

1. Dispositif (1) pour l'injection d'une pièce moulée en matière synthétique (2) sur un module fonctionnel (3) pour la formation d'une pièce à plusieurs composants (4) avec un moule d'injection (5), qui présente une ouverture de moule pour le logement localisé du module fonctionnel (3), dans lequel le moule d'injection (5) présente au moins trois plaques de moule (6a, 6b, 6c), qui sont déplaçables entre une position d'injection fermée et une position de traitement avec les plaques de moule (6a, 6b, 6c) respectivement espacées l'une de l'autre, dans lequel il est prévu un support de modules fonctionnels (13) pouvant être positionné entre une réserve de modules fonctionnels (12) et une première région d'ouverture (7a) entre deux plaques de moule (6b, 6c) dans leur position de traitement pour transférer les modules fonctionnels (3) de la réserve de modules fonctionnels (12) à une des plaques de moule (6c), et dans lequel il est prévu une pince d'enlèvement (19) pour l'enlèvement de la pièce à plusieurs composants (4) hors d'une deuxième région d'ouverture (7b) entre deux plaques de moule (6a, 6b), **caractérisé en ce qu'**il se trouve sur la plaque de moule (6a) côté busette des picots d'injection (9), qui traversent respectivement un évidement (10) de la plaque de moule centrale (6b) et forment ainsi avec celle-ci l'ouverture de moule cylindrique creuse, de telle manière que les pièces moulées en matière synthétique (2) avec les modules fonctionnels injectés (3) puissent rester maintenues aux picots d'injection de la plaque de moule côté busette lors de l'ouverture du moule d'injection (5), et qu'elles puissent être saisies avec la pince d'enlèvement (19), dégagées des picots d'injection (9) et retirées hors de la deuxième région d'ouverture (7b) du moule d'injection (5).

2. Dispositif selon la revendication 1, **caractérisé en ce que** le moule d'injection (5) est réalisé sous forme de moule multiple et **en ce que** le support de module fonctionnel (13) est configuré pour transférer simultanément plusieurs modules fonctionnels (3) et la pince d'enlèvement (19) est configurée pour enlever simultanément plusieurs pièces à plusieurs composants (4).

3. Dispositif selon la revendication 1 ou 2, **caractérisé en ce que** le support de modules fonctionnels (13) est monté de façon déplaçable linéairement transversalement à l'axe d'ouverture du moule d'injection (5).

4. Dispositif selon l'une quelconque des revendications 1 à 3, **caractérisé en ce que** la pince d'enlèvement (19) présente au moins une mâchoire de pince (20) de forme adaptée à la pièce à plusieurs composants (4) qui doit être respectivement fabriquée.

5. Dispositif selon l'une quelconque des revendications 1 à 4, **caractérisé en ce qu'**il est prévu au moins un dispositif (17) pour l'alignement et/ou pour le contrôle fonctionnel des modules fonctionnels (3) maintenus sur le support de modules fonctionnels (13).

6. Dispositif selon l'une quelconque des revendications 1 à 5, **caractérisé en ce qu'**un dispositif pour séparer et aligner les modules fonctionnels (3) est associé à la réserve de modules fonctionnels (12).

7. Dispositif selon l'une quelconque des revendications 1 à 6, **caractérisé en ce que** le support de modules fonctionnels (13) et/ou la plaque de moule (6c) destinée à recevoir les modules fonctionnels (3) présentent des éléments de fixation (22) pour les modules fonctionnels (3).

8. Dispositif selon l'une quelconque des revendications 1 à 7, **caractérisé en ce que** le support de modules fonctionnels (13) présente au moins un élément de poussée (15) déplaçable linéairement pour transférer un module fonctionnel (3) à la plaque de moule concernée (6c).

9. Dispositif selon l'une quelconque des revendications 1 à 8, **caractérisé en ce que** le support de modules fonctionnels (13) et la plaque de moule (6c) destinée à recevoir les modules fonctionnels (3) présentent respectivement des éléments de couplage (23a, 23b) pour le positionnement des deux pièces l'une sur l'autre.

10. Dispositif selon l'une quelconque des revendications 1 à 9, **caractérisé en ce que** le moule d'injection (5) présente des inserts de moulage (8) pouvant s'ouvrir.

11. Dispositif selon l'une quelconque des revendications 1 à 10, **caractérisé en ce que** la plaque de moule (6c) prévue pour recevoir le module fonctionnel (3) présente au moins un logement pour un insert interchangeable (21) recevant une module fonctionnel (3).

12. Dispositif selon la revendication 11, **caractérisé en ce que** les inserts interchangeables (21) sont montés de façon à pouvoir tourner.

13. Dispositif selon la revendication 11 ou 12, **caractérisé en ce qu'**il est prévu un entraînement rotatif pour les inserts interchangeables (21).

14. Dispositif selon l'une quelconque des revendications 1 à 13, **caractérisé en ce qu'**il est prévu une busette à canal chaud (11) pour l'injection du matériau en matière synthétique dans le moule d'injection (5).

15. Dispositif selon la revendication 14, **caractérisé en ce que** la plaque de moule (6c) prévue pour recevoir le module fonctionnel (3), les inserts interchangeables (21) ou les éléments de fixation (22) sont configurés pour un assemblage par serrage avec les pièces de remplacement lors de l'ouverture du moule d'injection (5).
